# EUROPÄISCHE PATENTSCHRIFT

(11) **EP 2 180 198 B1**
(45) Veröffentlichungstag und Bekanntmachung des Hinweises auf die Patenterteilung: **01.08.2012**
(21) Anmeldenummer: 09012795.2
(22) Anmeldetag: 08.10.2009
(51) Int. Cl.: F16B 12/00

(54) **Möbelstück**
Item of furniture
Pièce de meuble

(30) Priorität: 21.10.2008 DE 102008052606
(43) Veröffentlichungstag der Anmeldung: 28.04.2010
(73) Patentinhaber: Dauphin Entwicklungs- u. Beteiligungs GmbH, 91217 Hersbruck (DE)
(72) Erfinder: Temme, Nadine, 37671 Höxter (DE)
(74) Vertreter: Rau, Albrecht

(56) Entgegenhaltungen:
- EP-A- 0 628 736
- FR-A- 1 434 263
- GB-A- 2 279 394

## Beschreibung

Die Erfindung betrifft ein Möbelstück, das einen Rahmen mit einem ersten Rahmenteil und einem mit diesem verbundenen zweiten Rahmenteil umfasst. Ferner hat das Möbelstück mindestens ein Paneel und mindestens ein Haltemittel zur Fixierung eines Paneels an dem ersten und zweiten Rahmenteil.

Aus dem Stand der Technik ist eine Vielzahl von Möbelstücken bekannt, die unterschiedliche Haltemittel zur Fixierung von Paneelen besitzen. Oftmals sind die Haltemittel mit dem Rahmen verschraubt, was eine aufwändige Montage des Möbelstücks zur Folge hat. Häufig sind die Haltemittel auch äußerst groß ausgebildet, was dann im Allgemeinen optisch nicht ansprechend wirkt.

Aus der GB 2 279 394 A ist ein Möbelstück mit einem Rahmen aus horizontalen und vertikalen Rahmenteilen bekannt. Der Rahmen trägt Paneele. Die Rahmenteile sind über Verbindungsmittel miteinander verbunden. Jedes Verbindungsmittel umfasst ein an einem horizontalen Rahmenteil befestigtes Band, das ein vertikales Rahmenteil umläuft. Die Paneele können einen konkaven Rand haben, der die Rahmenteile teilweise umgreift. Nachteilig an diesem bekannten Möbelstück ist, dass die Fixierung der Paneele nicht befriedigend ist.

Aus der EP 0 628 736 A2 ist ein weiteres Möbelstück mit horizontalen und vertikalen Rahmenteilen bekannt. Die Rahmenteile sind über Verbindungsmittel miteinander verbunden. Die Verbindungsmittel sind in die Rahmenteile eingesetzt. Paneele des Möbelstücks sind an ihren Kanten zylindrisch gekehlt. Sie können so fugenlos an den Rahmenteilen anliegen. Die FR 1 434 263 A offenbart ein weiteres Möbelstück mit vertikalen und horizontalen Rahmenteilen sowie mit Paneelen. Die Rahmenteile sind über Knotenelemente miteinander verbunden. Sie greifen formschlüssig in Paneel-Ränder ein.

Der Erfindung liegt daher die Aufgabe zugrunde, ein Möbelstück bereitzustellen, das äußerst einfach zu montieren ist. Ferner sollen die Haltemittel des Möbelstücks äußerst unauffällig sein und eine hohe Tragkraft haben.

Diese Aufgaben werden erfindungsgemäß durch die in dem Anspruch 1 angegebenen Merkmale gelöst. Der Kern der Erfindung liegt darin, dass das Haltemittel zwei zueinander quer verlaufende Haltearme umfasst, die jeweils eine Rahmenteil-Aufnahme und eine Paneel-Aufnahme aufweisen. Eine Rahmenteil-Aufnahme dient zum teilweisen Umgreifen eines Rahmenteils eines Rahmens, während eine Paneel-Aufnahme zum Halten eines Paneels vorgesehen ist.

Das Möbelstück kann beispielsweise ein Regal, eine Theke, ein Schrank, ein Tisch, eine Vitrine oder dergleichen sein. Es kann als Einrichtungsgegenstand dienen und es kann eine in sich stabile Einheit bilden.

Weitere vorteilhafte Ausgestaltungen der Erfindung sind in den Unteransprüchen angegeben.

Nachfolgend wird unter Bezugnahme auf die beigefügte Zeichnung eine bevorzugte Ausführungsform der Erfindung beschrieben. Dabei zeigen:
- Fig. 1: eine perspektivische, vereinfachte Darstellung eines erfin- dungsgemäßen Möbelstücks,
- Fig. 2: einen Schnitt durch das in Fig. 1 dargestellte Möbelstück, der ein Rahmenteil, ein Paneel und ein Haltemittel zeigt,

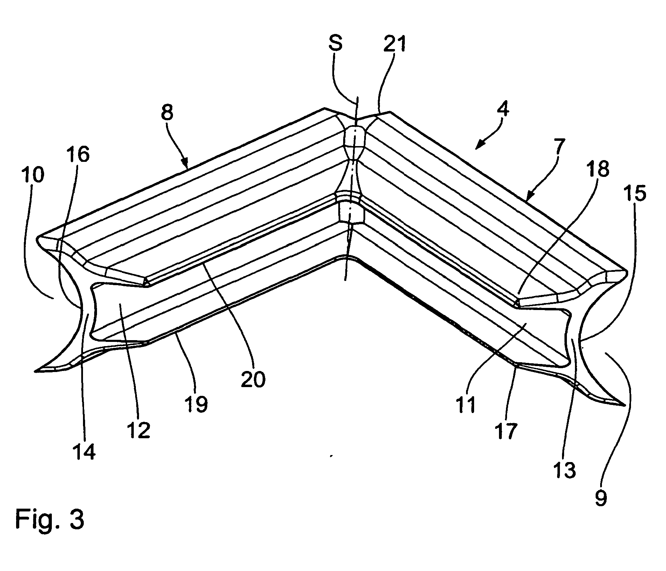

- Fig. 3: eine perspektivische Ansicht eines in den Fig. 1 und 2 dar- gestellten erfindungsgemäßen Haltemittels, und

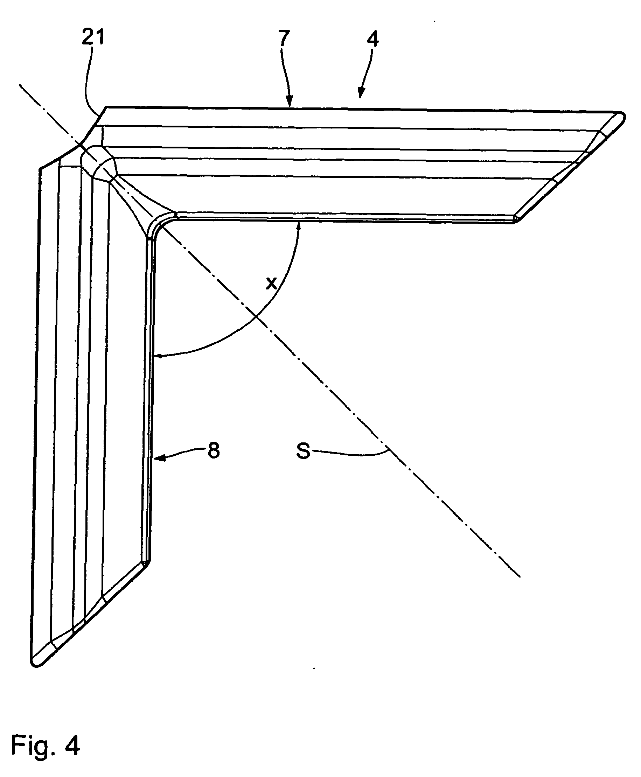

- Fig. 4: eine Draufsicht auf das in Fig. 3 dargestellte Haltemittel.

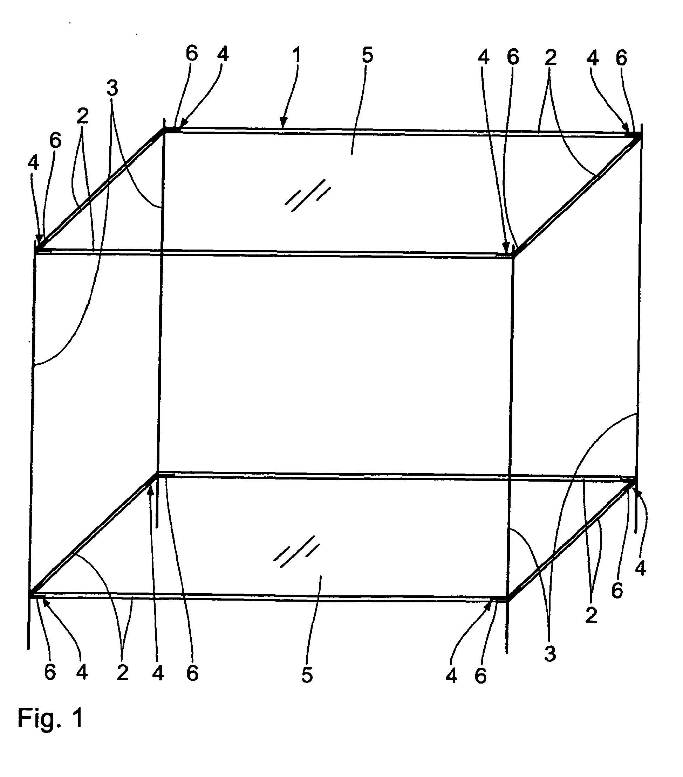

Ein Möbelstück umfasst einen starren Rahmen 1, der aus mehreren, miteinander verbundenen Rahmenteilen gebildet ist. Die Rahmenteile sind rohrartig ausgebildet und weisen einen identischen kreisringförmigen Querschnitt auf. Es sind sowohl vertikal verlaufende als auch horizontal verlaufende Rahmenteile vorgesehen. Der Rahmen 1 weist eine im Wesentlichen quaderartige Grundform auf. Den horizontal verlaufenden Rahmenteilen ist hier das Bezugszeichen 2 zugeordnet, während die vertikal verlaufenden Rahmenteile das Bezugszeichen 3 haben. In die Ecken zwischen zwei aneinander anstoßenden, horizontalen Rahmenteilen 2 ist jeweils ein starres Haltemittel 4 eingesetzt, das die beiden Rahmenteile 2 jeweils teilweise umgreift, um an diesen örtlich festgelegt zu sein. Die Haltemittel 4 dienen zur Fixierung mindestens eines Paneels 5. Gemäß Fig. 1 sind zwei Paneelen 5 vorgesehen, die hier jeweils in einer horizontalen Ebene liegen. Die Rahmenteile 2, 3 bestehen vorzugsweise aus einem metallischen Material. Kunststoff kann auch Anwendung finden. Die Haltermittel 4 können ebenfalls aus einem metallischen Material oder einem Kunststoffmaterial gebildet sein. Der Rahmen 1 ist selbsttragend und skelettartig ausgebildet. Vier untere, horizontale Rahmenteile 2 sind unter Bildung eines Rechtecks miteinander verschraubt. Durch diese vier miteinander verbundenen Rahmenteile 2 wird eine horizontale Bodenebene aufgespannt. Weitere vier obere Rahmenteile 2 sind unter Bildung eines weiteren Rechtecks miteinander verschraubt, das identisch zu dem durch die unteren Rahmenteile 2 gebildeten Rechteck ist. Durch diese vier miteinander verbundenen oberen Rahmenteile 2 wird eine horizontale Deckenebene aufgespannt, die parallel zu der Bodenebene und oberhalb derselben verläuft. Zwischen zwei aneinander anstoßenden Rahmenteilen 2 einer Ebene ist jeweils eine im Wesentlichen rechtwinklige Ecke 6 gebildet. Im Bereich jeder Ecke 6 ist jeweils mindestens ein vertikales Rahmenteil 3 an den benachbarten beiden Rahmenteilen 2 befestigt. Die Rahmenteile 3 sind sowohl mit den oberen Rahmenteilen 2 als auch mit den unteren Rahmenteilen 2 verbunden. Sie stützen die Rahmenteile 2 gegenüber einem Boden ab. Ferner sorgen sie für eine beabstandete Anordnung der unteren und oberen Rahmenteile 2. Die Verbindung zwischen den Rahmenteilen 2, 3 kann beispielsweise durch Schrauben erfolgen.

Zum Halten eines plattenartigen, rechteckigen Paneels 5, das vorzugsweise durchsichtig ist und aus Glas besteht, sind vier Haltemittel 4 vorgesehen. Ein Paneel 5 ist an den oberen Rahmenteilen 2 angebracht, während ein zweites Paneel 5 an den unteren Rahmenteilen 2 befestigt ist. Von den Paneelen 5 können Gegenstände zur Aufbewahrung, Präsentation oder dergleichen getragen werden. Die Paneelen 5 können aber auch als Abschlussplatten dienen. Sie werden von den oberen bzw. unteren Rahmenteilen 2 umlaufen.

Die Haltemittel 4 sind jeweils identisch und weisen eine Winkelform auf. Sie sind jeweils einstückig ausgebildet. Vorzugsweise sind sie transparent bzw. durchsichtig. In einer Ecke 6 ist jeweils ein Haltemittel 4 angeordnet. Ein Haltemittel 4 umfasst einen ersten Haltearm 7 und einen quer zu diesem verlaufenden, zweiten Haltearm 8. Hier erstrecken sich die Haltearme 7, 8 senkrecht zueinander. Bei anderen Formen des Rahmens 1 können die Haltearme 7, 8 auch einen entsprechend anderen Winkel x zueinander einschließen. Die Haltemittel 4 sind bezüglich einer Symmetrieebene S symmetrisch, die den durch die Haltearme 7, 8 aufgespannten Winkel x halbiert. Die Haltemittel 4 sind auch zu einer Symmetrieebene symmetrisch, die senkrecht zu der Symmetrieebene S verläuft und die beiden Haltearme 7, 8 gemeinsam mittig schneidet. Die Haltearme 7, 8 gehen von einem zentralen Knotenpunkt aus. Jeder Haltearm 7, 8 weist eine nach außen offene Rahmenteil-Aufnahme 9, 10 und eine nach innen offene Paneel-Aufnahme 11, 12 auf, deren Zentrum jeweils auf gleicher oder im Wesentlichen auf gleicher Höhe liegt. Die Haltearme 7, 8 besitzen zur Bildung der Aufnahmen 9, 10, 11, 12 jeweils einen zentralen Grundsteg 13, 14, der eine nach innen gekrümmt verlaufende, äußere Wandung 15, 16 hat. Die Krümmungen der Wandungen 15, 16 sind an die kreisförmige Krümmung der Außenfläche der Rahmenteile 2 angepasst. Die Krümmungen sind im Wesentlichen identisch.

Die Paneel-Aufnahmen 11, 12, die jeweils gegenüber liegend zu den Rahmenteil-Aufnahmen 9, 10 des entsprechenden Haltearms 7, 8 angeordnet sind, sind nach außen durch den Grundsteg 13, 14 begrenzt. Von dem Grundsteg 13, 14, der die Aufnahmen 9, 11 bzw. 10, 12 eines Haltearms 7, 8 voneinander trennt, springen jeweils zwei zueinander benachbart angeordnete Haltestege 17, 18 bzw. 19, 20 nach innen vor. Die Haltestege 17, 18 bzw. 19, 20 eines Haltearms 7, 8 verlaufen jeweils parallel zueinander, sodass die Paneel-Aufnahmen 11, 12 im Querschnitt jeweils im Wesentlichen U-förmig ausgebildet sind. Der Abstand der Haltestege 17, 18 bzw. 19, 20 eines Haltearms 7, 8 entspricht im Wesentlichen der Dicke des zu haltenden Paneels 5. Die Paneel-Aufnahmen 11, 12 sind miteinander verbunden.

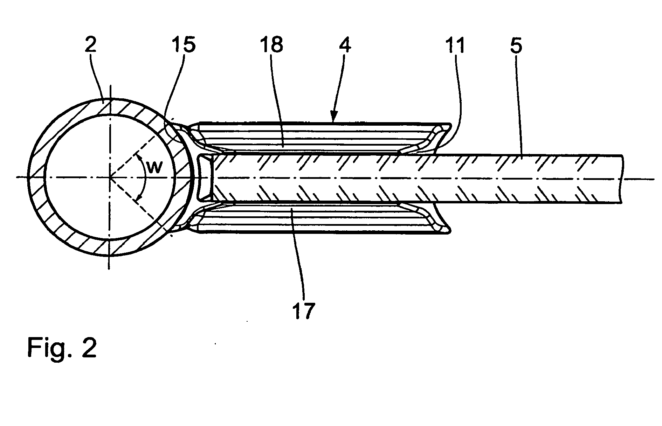

Die Rahmenteil-Aufnahmen 9, 10, die durch die gekrümmten Wandungen 15, 16 begrenzt sind, umgreifen jeweils teilweise zwei direkt miteinander verbundene Rahmenteile 2. Wie aus Fig. 2 hervorgeht, liegt die Wandung 15 dabei flächig außen an dem jeweiligen Rahmenteil 2 an. Die Rahmenteil-Aufnahmen 9, 10 liegen über einen Winkelbereich w an dem jeweiligen Rahmenteil 2 an, der in etwa 90° beträgt. Dies entspricht in etwa einem Viertel der Gesamtumfangsfläche des jeweiligen Rahmenteils 2 in dem Bereich des Haltemittels 4. Der Winkelbereich w kann im Allgemeinen zwischen 45° und 180° liegen.

Ein Rahmenteil 3 durchdringt eine mittige Aufnahme 21 des Haltearms 7, 8, die sich außen zwischen den Haltearmen 7, 8 erstreckt und das jeweilige Rahmenteil 3 fixieren kann.

Die Paneelen 5 sind in die Paneel-Aufnahmen 11, 12 eingesetzt, wodurch die Paneelen 5 gehalten werden. Sie werden dabei von den unteren Haltestege 17, 19 getragen, während die oberen Haltestege 18, 20 ein Herausheben der Paneelen 5 aus den Haltemitteln 4 verhindern. Die Haltestege 17, 18, 19, 20 umgreifen die Paneelen 5 jeweils randseitig und verlaufen im Wesentlichen horizontal. Die Länge und Tiefe der Haltestege 17, 18 bzw. 19, 20 ist so gewählt, dass die Paneelen 5 ausreichend und sicher in den Paneel-Aufnahmen 11, 12 gehalten werden. Die vier Haltemittel 4 sind getrennt ausgebildet. Sie weisen somit einen Abstand zueinander auf. Die Länge der Haltearme 7, 8 ist wesentlich kürzer als die jeweilige Abmessung des zu haltenden Paneels 5.

Nachfolgend wird die Montage des erfindungsgemäßen Möbelstücks kurz beschrieben. Drei horizontale Rahmenteile 2, die sich dann später in einer Ebene des Möbelstücks 1 befinden, werden miteinander unter Bildung eines U's bzw. eines einseitig offenen Rechtecks verschraubt. Ein Paneel 5 wird von der offenen Seite mit zwei Haltemitteln 4 in das U eingeschoben, bis die beiden Haltemittel 4 an dem den U-Boden bildenden Rahmenteil 2 zur Anlage kommen. Dabei sind die Rahmenteile 2 in den Rahmenteil-Aufnahmen 9, 10 der Haltearme 7, 8 aufgenommen. Dann werden zwei weitere Haltemittel 4 endseitig an das Paneel 5 angesetzt. Anschließend wird das fehlende Rahmenteil 2 mit den das U bildenden Rahmenteilen 2 verschraubt, wodurch das Paneel 5 über vier Haltemittel 4 an den vier Rahmenteilen 2 sicher gehalten wird. Anschließend werden die vertikalen Rahmenteile 3 mit den Rahmenteilen 2 verbunden. Eine Demontage des Möbelstücks erfolgt in umgekehrter Weise.

Mindestens eine Zwischenebene kann ebenfalls bei dem Möbelstück 1 unter Verwendung weiterer, miteinander verbundener Rahmenteile 2 vorgesehen sein.

Bei alternativen Ausführungsformen haben die Paneelen 5 andere Formen, wobei die Orientierung der Haltearme 7, 8 zueinander entsprechend angepasst ist. Beispielsweise können andere eckige Formen, wie dreieckige, fünfeckige, sechseckige, siebeneckige... Formen vorgesehen sein.

Es können auch mehrere Paneelen 5 nebeneinander angeordnet sein. Der Rahmen 1 ist dann entsprechend zu ändern. An dem Rahmenteil 2, das sich dann zwischen den beiden Paneelen 5 erstreckt, liegen dann insgesamt vier Haltemittel 4 an. Zwei Haltemittel 4 sind benachbart zueinander angeordnet und liegen einander gegenüber.

Gemäß einer alternativen Ausführungsform ist mindestens ein Paneel 5 vorgesehen, das vertikal orientiert ist und somit eine Seitenwand und/oder eine Rückwand eines Möbelstücks 1 bildet. Auch für eine derartige Anordnung eines Paneels 5 können die Haltemittel 4 entsprechend angewandt werden. Ihre jeweilige Lage ist dann gegenüber der unter Bezugnahme auf Fig. 1 beschriebenen Orientierung um 90° um einen Haltearm 7, 8 entsprechend gedreht.

Gemäß einer alternativen Ausführungsform sind sowohl horizontal verlaufende als auch vertikal verlaufende Paneelen 5 vorgesehen. Diese Paneele 5 können dabei im Wesentlichen senkrecht aneinander anstoßen, sodass in einem Knotenpunkt des Rahmens 1, der durch Rahmenteile 2 und Rahmenteile 3 gebildet wird, wieder mehr als ein Haltemittel 4 vorgesehen sind. Die Haltemittel 4 sind dann entsprechend versetzt zueinander angeordnet.

Alternativ haben die Rahmenteile 2, 3 einen kreisförmigen Querschnitt. Sie können aber auch einen eckigen Querschnitt haben, wobei dann auch die Rahmenteil-Aufnahmen 9, 10 unter Umständen entsprechend zu ändern sind.

Das erfindungsgemäße Möbelstück ist äußerst einfach zu montieren. Für die Festlegung der Paneelen 5 an dem Rahmen 1 über die Haltemittel 4 sind keine Hilfsmittel notwendig.

## Patentansprüche

1. Möbelstück, umfassend
a) einen Rahmen (1), der ein erstes Rahmenteil (2, 3) und ein mit diesem verbundenes zweites Rahmenteil (2, 3) aufweist,
b) mindestens ein Paneel (5), und
c) mindestens ein Haltemittel (4) zur Fixierung eines Paneels (5) an dem ersten und zweiten Rahmenteil (2, 3), wobei mindestens ein Haltemittel (4) umfasst
d) einen ersten Haltearm (7)
e) mit einer Rahmenteil-Aufnahme (9) zum teilweisen Umgreifen des ersten Rahmenteils (2, 3) und
f) mit einer Paneel-Aufnahme (11) zum Halten des Paneels (5),
g) wobei die Rahmenteil-Aufnahme (9) des ersten Haltearms (7) gegenüberliegend zu der Paneel-Aufnahme (11) des ersten Haltearms (7) angeordnet ist,
**dadurch gekennzeichnet, dass** das mindestens eine Haltemittel (4) ferner umfasst
h) einen zweiten Haltearm (8),
i) der quer zu dem ersten Haltearm (7) verläuft,
j) der eine Rahmenteil-Aufnahme (10) zum teilweisen Umgreifen des zweiten Rahmenteils (2, 3) aufweist, und
k) der eine Paneel-Aufnahme (12) zum Halten des Paneels (5) aufweist,
l) wobei die Rahmenteil-Aufnahme (10) des zweiten Haltearms (8) gegenüberliegend zu der Paneel-Aufnahme (12) des zweiten Haltearms (8) angeordnet ist, und m) wobei die Rahmenteil-Aufnahme (9, 10) und die Paneel-Aufnahme (11, 12) jeweils einander gegenüberliegende Einführ-Öffnungen aufweisen.

2. Möbelstück nach Anspruch 1, **dadurch gekennzeichnet, dass** der zweite Haltearm (8) im Wesentlichen senkrecht zu dem ersten Haltearm (7) verläuft.

3. Möbelstück nach einem der vorherigen Ansprüche, **dadurch gekennzeichnet, dass** die Rahmenteil-Aufnahme (9) des ersten Haltearms (7) durch eine gekrümmte Wandung (15) zur Anlage an dem ersten Rahmenteil (2, 3) begrenzt ist.

4. Möbelstück nach einem der vorherigen Ansprüche, **dadurch gekennzeichnet, dass** die Rahmenteil-Aufnahme (10) des zweiten Haltearms (8) durch eine gekrümmte Wandung (16) zur Anlage an dem zweiten Rahmenteil (2, 3) begrenzt ist.

5. Möbelstück nach einem der vorherigen Ansprüche, **dadurch gekennzeichnet, dass** die Paneel-Aufnahme (11) des ersten Haltearms (7) im Querschnitt im Wesentlichen U-förmig ist.

6. Möbelstück nach einem der vorherigen Ansprüche, **dadurch gekennzeichnet, dass** die Paneel-Aufnahme (12) des zweiten Haltearms (8) im Querschnitt im Wesentlichen U-förmig ist.

7. Möbelstück nach einem der vorherigen Ansprüche, **dadurch gekennzeichnet, dass** der erste Haltearm (7) und der zweite Haltearm (8) identisch zueinander ausgebildet sind.

8. Möbelstück nach einem der vorherigen Ansprüche, **dadurch gekennzeichnet, dass** das Haltemittel (4) einstückig ist.

## Claims

1. Item of furniture comprising
a) a frame (1) which comprises a first frame part (2, 3) and a second frame part (2, 3) connected thereto,
b) at least one panel (5) and
c) at least one holding means (4) for fixing a panel (5) onto the first and second frame part (2, 3), wherein at least one holding means (4) comprises
d) a first holding arm (7)
e) with a frame part mount (9) for partly gripping around the first frame part (2, 3) and
f) with a panel mount (11) for holding the panel (5),
g) wherein the frame part mount (9) of the first holding arm (7) is arranged opposite the panel mount (11) of the first holding arm (7),
**characterised in that** at least one holding means (4) also comprises
h) a second holding arm (8),
i) which runs perpendicular to the first holding arm (7),
j) which comprises a frame part mount(10) for partly gripping around the second frame part (2, 3) and
k) which comprises a panel mount (12) for holding the panel (5),
l) wherein the frame part mount (10) of the second holding arm (8) is arranged opposite the panel mount (12) of the second holding arm (8), and
m) wherein the frame part mount (9, 10) and the panel mount (11, 12) comprise opposite insertion openings.

2. Item of furniture according to claim 1, **characterised in that** the second holding arm (8) runs essentially perpendicular to the first holding arm (7).

3. Item of furniture according to any one of the preceding claims, **characterised in that** the frame part mount (9) of the first holding arm (7) is delimited by a curved wall (15) for bearing on the first frame part (2, 3).

4. Item of furniture according to any one of the preceding claims, **characterised in that** the frame part mount (10) of the second holding arm (8) is delimited by a curved wall (16) for bearing on the second frame part (2, 3).

5. Item of furniture according to any one of the preceding claims, **characterised in that** the panel mount (11) of the first holding arm (7) is essentially U-shaped in cross section.

6. Item of furniture according to any one of the preceding claims, **characterised in that** the panel mount (12) of the second holding arm (8) is essentially U-shaped in cross section.

7. Item of furniture according to any one of the preceding claims, **characterised in that** the first holding arm (7) and the second holding arm (8) are designed to be identical to one another.

8. Item of furniture according to any one of the preceding claims, **characterised in that** the holding device (4) is in one piece.

## Revendications

1. Pièce de meuble comprenant
a) un châssis (1) qui présente une première partie de châssis (2, 3) et une seconde partie de châssis (2, 3) reliée à celle-ci,
b) au moins un panneau (5) et
c) au moins un moyen de retenue (4) pour la fixation d'un panneau (5) sur la première partie et sur la seconde partie de châssis (2, 3), où au moins un moyen de retenue (4) comprend
d) un premier bras de retenue (7)
e) comprenant un support de partie de châssis (9) pour entourer partiellement la première partie de châssis (2, 3) et
f) comprenant un support de panneau (11) pour le maintien du panneau (5),
g) où le support de partie de châssis (9) du premier bras de retenue (7) est disposé attenant en face du support de panneau (11) du premier bras de retenue (7),
**caractérisé en ce qu'**au moins un moyen de retenue (4) comprend en outre
h) un second bras de retenue (8)
i) qui s'étend perpendiculairement par rapport au premier bras de retenue (7),
j) qui présente un support de partie de châssis (10) pour l'entourage partiel de la seconde partie de châssis (2, 3) et
k) qui présente un support de panneau (12) pour le maintien du panneau (5),
l) où le support de partie de panneau (10) du second bras de retenue (8) est disposé attenant en face du support de panneau (12) du second bras de retenue (8)
et
m) où le support de partie de châssis (9, 10) et le support de panneau (11, 12) présentent chacun des ouvertures d'entrée opposées l'une à l'autre.

2. Pièce de meuble selon la revendication 1 **caractérisée en ce que** le second bras de retenue (8) s'étend pratiquement verticalement par rapport au premier bras de retenue (7).

3. Pièce de meuble selon l'une des revendications précédentes **caractérisée en ce que** le support de partie de châssis (9) du premier bras de retenue (7) est délimité par une paroi courbe (15) pour l'agencement contre la première partie de châssis (2, 3).

4. Pièce de meuble selon l'une des revendications précédentes **caractérisée en ce que** le support de partie de châssis (10) du second bras de retenue (8) est délimité par une paroi courbe (16) pour l'agencement contre la seconde partie de châssis (2, 3).

5. Pièce de meuble selon l'une des revendications précédentes **caractérisée en ce que** le support de panneau (11) du premier bras de retenue (7) possède dans l'ensemble une section en forme de U.

6. Pièce de meuble selon l'une des revendications précédentes **caractérisée en ce que** le support de panneau (12) du second bras de retenue (8) possède dans l'ensemble une section en forme de U.

7. Pièce de meuble selon l'une des revendications précédentes **caractérisée en ce que** le premier bras de retenue (7) et le second bras de retenue (8) sont conçus identiques l'un par rapport à l'autre.

8. Pièce de meuble selon l'une des revendications précédentes **caractérisée en ce que** le moyen de retenue (4) est en une seule pièce.
